# EUROPÄISCHE PATENTANMELDUNG

(11) **EP 0 795 768 A2**
(43) Veröffentlichungstag der Anmeldung: **17.09.1997**
(21) Anmeldenummer: 97101253.9
(22) Anmeldetag: 28.01.1997
(51) Int. Cl.: G02B 6/46

(54) **Managementfähige Spleisskassette**

(30) Priorität: 14.03.1996 DE 19611770
(71) Anmelder: KRONE Aktiengesellschaft, D-14167 Berlin (DE)
(72) Erfinder: Röseler, Volker, Dipl.-Ing., 10555 Berlin (DE); Rogge, Clemens, 14167 Berlin (DE); Klein, Klaus, 12355 Berlin (DE)

(57) **Zusammenfassung**

Die Erfindung betrifft eine managementfähige Spleißkassette für die Kommunikations- und Datentechnik, zur Aufnahme von Trägerschalen für jeweils zwei Glasfasern, bestehend aus einem Gehäuse mit Leitungsanschlußmitteln, einem mit dem Gehäuse verbundenen Träger, mit dem die Trägerschalen drehbar verbunden sind.

Die Aufgabe der Erfindung, eine managementfähige Spleißkassette zu entwickeln, die austauschbar mit anderen Spleißkassetten ist und die insbesondere in bekannte Spleißkassettengehäuse anstelle der üblichen Spleißkassetten eingesetzt werden kann und die eine verfügbare Reservelänge und eine geringe Bauhöhe gewährleistet sowie eine wirtschaftliche und einfache Handhabung erlaubt, wird dadurch gelöst, daß die Trägerschalen 2 in mindestens zwei nebeneinanderliegenden Aufnahmen 6 jeweils übereinander gestapelt angeordnet sind, wobei jede der Trägerschalen 2 an einer ihrer Seiten bis in eine Raststellung 7 drehbar gelagert ist.

## Beschreibung

Die Erfindung bezieht sich auf eine managementfähige Spleißkassette für die Telekommunikations- und Datentechnik, zur Aufnahme von Trägerschalen für jeweils zwei Glasfasern, gemäß dem Oberbegriff des Anspruches 1.

Neben den herkömmlichen Spleißkassetten für bis zu vierundzwanzig Spleißen, die in Spleißkassettengehäusen eingebracht sind und eine ausreichende Arbeitslänge von Schalt- und Bündeladern zur Verfügung stellen, sind Spleißaufnahmen für maximal zwei Spleiße bekannt geworden, die sogenannten "Single-Circuit-Management".

Diese als "Single-Circuit-Management" bezeichneten Spleißaufnahmen sind Trägerschalen für zwei Glasfasern, die über einen Träger in einer Einheit beweglich zusammengefaßt sind. Die Anwendung solcher Trägerschalen ist vorteilhaft, wenn an die zu schaltende Verbindung hohe Sicherheitsanforderungen gestellt werden. Es wird eine feste und kontrollierte Führung der Fasern gewährleistet.

Aus der US 5,323,480 ist eine Spleißkassette bekannt, die aus einem Gehäuse mit Leitungsanschlußmitteln für eine oder mehrere Glasfasern und mit einem Träger und aus einer Vielzahl von Trägerschalen besteht. Die Trägerschalen sind an einem Ende drehbar mit dem Träger verbunden. Jede Trägerschale kann zwischen einer gestapelten und einer angehobenen Position bewegt werden, um den Zugang zu den darunterliegenden Trägerschalen zu erleichtern.

Zur Führung der Fasern werden flexible Transporthülsen verwendet, die von den Leitungsanschlußmitteln bis zu den Trägerschalen verwendet werden. Im ersten Führungsabschnitt, der mehrere Meter betragen kann, wird eine Transporthülle entsprechender Dimensionierung über eine der Bündeladern geschoben und bis zum ersten Verteilerelement geführt. Dort werden zum Beispiel die bisdahin geführten acht Fasern in vier mal zwei Fasern geteilt. Auf jeweils zwei Fasern werden nun dünnere Transporthülsen geschoben und über Führungsrillen an die Trägerschalen herangeführt. In den Trägerschalen erfolgt die weitere Faserführung ohne Hülsen.

Diese Art der Spleißkassetten ist in der Handhabung umständlich, insbesondere bei Montagen an Endverteilern, infolge der langen Faser-Führungs-Strecken und der Notwendigkeit des Aufschiebens der Transporthülsen. Die Vorbereitung des Spleißvorgangs ist aufwendig, unbequem und umständlich. Es ist zudem auch keine Reservelänge verfügbar, um an den Spleißarbeitsplatz zu kommen. Die Bauhöhe ist immer durch die Höhe der Trägerschalen bestimmt, unabhängig von der Anzahl der Trägerschalen bzw. auch der Verbindungsstellen.

Der Erfindung liegt von daher die Aufgabe zugrunde, eine managementfähige Spleißkassette zu entwickeln, die austauschbar mit anderen Spleißkassetten ist und die insbesondere in bekannte Spleißkassettengehäuse anstelle der üblichen Spleißkassetten eingesetzt werden kann und die eine verfügbare Reservelänge und eine geringe Bauhöhe gewährleistet sowie eine wirtschaftliche und einfache Handhabung erlaubt.

Die Lösung dieser Aufgabe ergibt sich aus den Merkmalen des Anspruches 1. Die Anordnung der Trägerschalen in zwei nebeneinanderliegenden Aufnahmen derart, daß die Drehpunkte der einzelnen übereinander angeordneten Trägerschalen in unterschiedlichen Ebenen liegen, erlaubt kürzere Führungen der Glasfasern und gewährleistet insbesondere in Verbindung mit Spleißkassettengehäusen stets eine ausreichende Reservelänge zur Handhabung an einem Spleißarbeitsplatz. Es können mehrere Spleißkassetten (Single-Circuit-Management bzw. Trägerschalen) für maximal zwei Spleiße in ein herkömmliches Spleißkassettengehäuse für maximal vierundzwanzig Spleiße oder als Austausch für eine solche Spleißkassette untergebracht werden ohne Werkzeuganwendung. Es wird auch für solche Spleißkassetten eine entsprechende Arbeitslänge an Adern zur Verfügung gestellt.

Die Bauhöhe ist geringer als beim bekannten Stapeln von Trägerschalen, die Bauhöhe wird nicht durch die Höhe, sondern durch die Stärke der Trägerschalen und deren Anzahl im Stapel bestimmt. Die Montage bzw. Handhabung ist einfach und wenig aufwendig, da keinerlei Hülsen benötigt werden, um die Bündeladern an die Trägerschalen heranzuführen.

Die Erfindung ist nachfolgend anhand eines in den Zeichnungen dargestellten Ausführungsbeispiels einer managementfähigen Spleißkassette angeordnet in einem Spleißkassettengehäuse näher erläutert. Es zeigen:
- Fig. 1: die Draufsicht auf ein Spleißkassettengehäuse mit eingelegter managementfähiger Spleißkassette mit darin eingelegten Trägerschalen,
- Fig. 2: die Draufsicht auf die managementfähige Spleißkassette nach Fig. 1,
- Fig. 3: in Schnittdarstellung die Seitenansicht der managementfähigen Spleißkassette nach Fig. 2 mit einer ausgeklappten Trägerschale,
- Fig. 4: die Draufsicht auf das Gehäuse der managementfähigen Spleißkassette gemäß der Fig. 2 und
- Fig. 5: die Draufsicht auf eine Trägerschale für zwei Glasfasern nach Fig. 1.

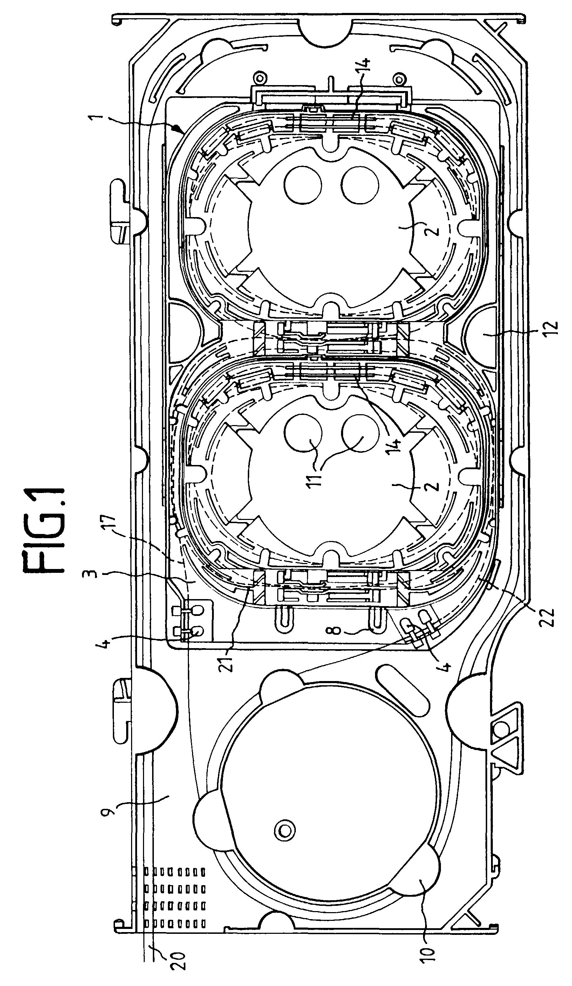

Die Fig. 1 zeigt in der Draufsicht ein Spleißkassettengehäuse 9 mit Führungen 10 für Reservelängen, in das eine managementfähige Spleißkassette 1 über Rastvorrichtungen 8 eingebracht ist.

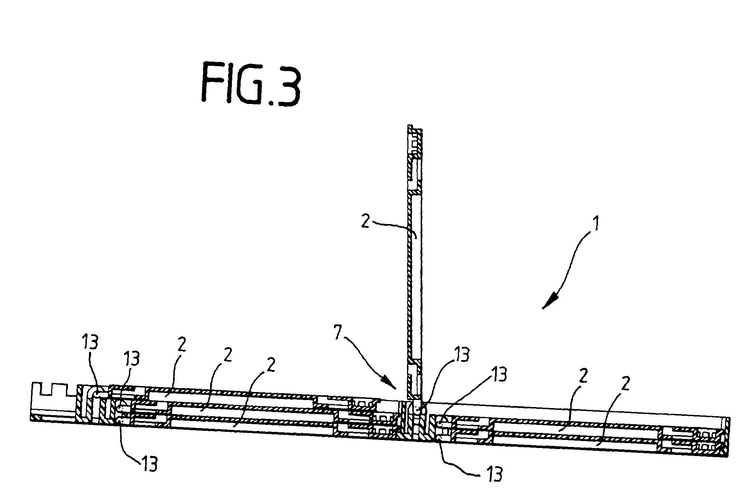

Die managementfähige Spleißkassette 1 weist Leitungsanschlußmittel 4 und Griffmulden 12 auf. In die Spleißkassette 1 sind nebeneinanderliegend Trägerschalen 2 eingebracht, die für jeweils zwei Glasfasern 17 die entsprechenden Spleiße 14 enthält. Die Trägerschalen 2 sind mit Grifföffnungen 11 versehen, über die eine Bewegung der Trägerschalen 2 über Drehpunkte 13 in eine Raststellung 7 (Fig. 3) ermöglicht wird. Im vorliegenden Beispiel sind in die Spleißkassette 1 sechs Trägerschalen 2 für maximal zwölf Glasfasern 17 eingebracht (Fig. 3).

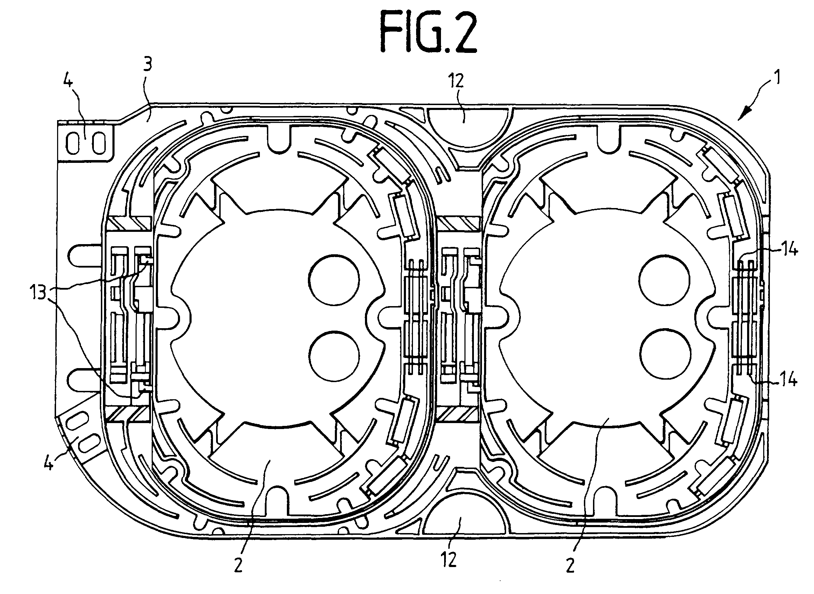

Die Spleißkassette 1 nach Fig. 2 besteht aus einem Gehäuse 3, in welches die Trägerschalen 12 eingebracht sind. Die Fig. 2 zeigt die Anordnung der Spleiße 14 und der Drehpunkte 13 der eingelegten Trägerschalen 2 ohne in die Faserführungen eingelegte Glasfasern 17. Die Spleißkassette 1 kann in dieser Ausführung auch ohne das Spleißkassettengehäuse 9 nach Fig. 1 in z.B. 19"-Einschüben verwendet werden. Zweckmäßigerweise ist in einigen Fällen die Kassette 1 mit einem nicht dargestellten Deckel versehen.

Die Fig. 3 zeigt in einer Schnittdarstellung die in die Spleißkassette 1 eingelegten Trägerschalen 2, wobei eine der Trägerschalen 2 in die Raststellung 7 gedreht ist, so daß die darunterliegende Trägerschale 2 frei zugänglich ist. Die Drehpunkte 13 der einzelnen Trägerschalen 2 sind in unterschiedlichen Ebenen angeordnet.

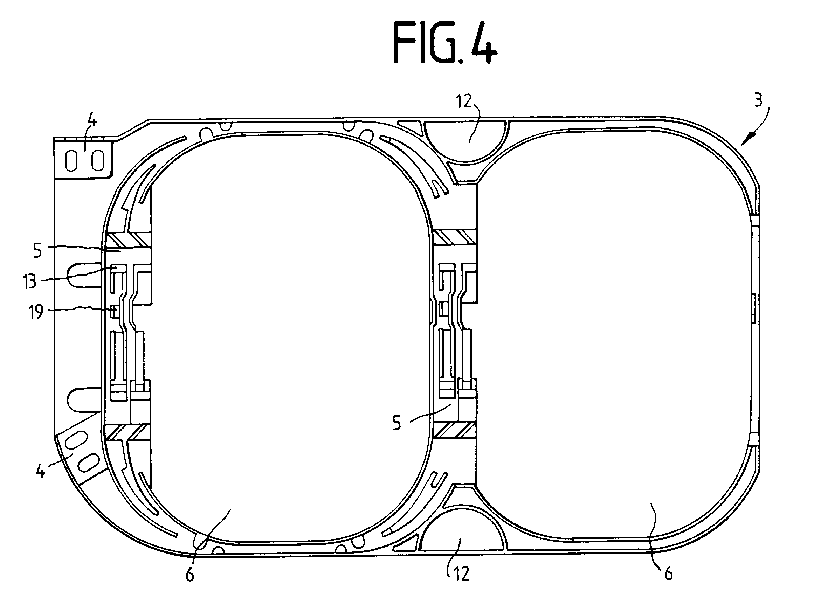

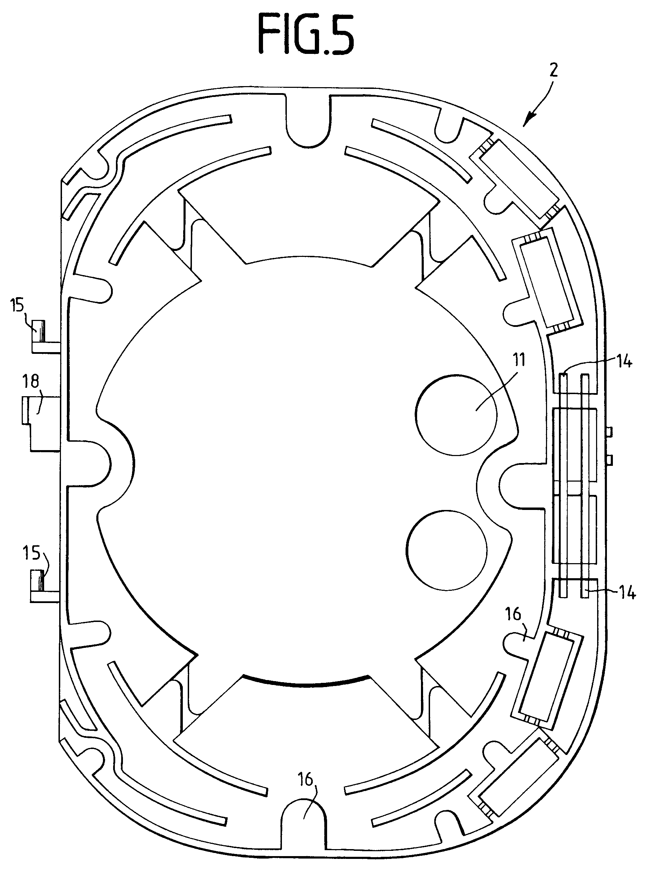

Die Fig. 4 zeigt die Draufsicht auf das Spleißkassettengehäuse 3 ohne eingebrachte Trägerschalen 2. Das Gehäuse 3 enthält Aufnahmen 6 für die Trägerschalen 2 und zwei Träger 5, über die die Trägerschalen 2 mit dem Gehäuse 3 drehbar verbunden sind. Des weiteren sind die Leitungsanschlußmittel 4 und die Griffmulden 12 dargestellt. Die Träger 5 bilden zusammen mit den Elementen 15 (Fig. 5) der jeweiligen Trägerschale 2 den jeweiligen Drehpunkt 13 für die Trägerschale 2. Ein Rastelement 19 auf dem Träger 5 erlaubt ein Einrasten der Trägerschalen 2.

In der Fig. 5 ist die Draufsicht auf eine Trägerschale 2 mit den Spleißen 14 und den Elementen 15 zur drehbaren Halterung der Trägerschale 2 auf dem Träger 5 (Fig. 4) sowie mit den Grifföffnungen 11 und Niederhaltern 16 gezeigt. Ein Rastelement 18 wirkt mit dem Rastelement 19 (Fig. 4) auf dem Träger 5 zusammen und gewährleistet das Einrasten der Trägerschale 2 in eine Raststellung 7 (Fig. 3).

Nach der vorliegenden Erfindung kann entsprechend der Darstellung in der Fig. 1 zum Beispiel eine Bündelader 20 mit zwölf Glasfasern 17 im konfektionierten Zustand bis zum Leitungsanschlußmittel 4, d.h. bis zum Eingang der Spleißkassette 1, geführt werden. Erst danach wird die Umhüllung der Bündelader 20 entfernt, und es werden die zwölf Glasfasern 17 in Führungen bis zum Eingang einer der Trägerschalen 2, der sich in der Nähe des Drehpunktes 13 der Trägerschale 2 befindet, geführt. In die sechs Trägerschalen 2 werden jeweils zwei Glasfasern 17 eingeführt und über die Spleiße 14 mit den Schaltfasern 22 verbunden. Die Schaltfasern 22 sind ebenfalls bis zum Leitungsanschlußmittel 4 am Ausgang der Spleißkassette 1 innerhalb der Spleißkassette 1 ohne die äußere Umhüllung und danach mit der handelsüblichen Umhüllung in Führungen geführt.

### BEZUGSZEICHENLISTE

- 1: Spleißkassette
- 2: Trägerschale
- 3: Gehäuse
- 4: Leitungsanschlußmittel
- 5: Träger
- 6: Aufnahme
- 7: Raststellung
- 8: Rastvorrichtung
- 9: Spleißkassettengehäuse
- 10: Führung
- 11: Grifföffnung
- 12: Griffmulde
- 13: Drehpunkt
- 14: Spleiß
- 15: Element
- 16: Niederhalter
- 17: Glasfaser
- 18: Rastelement
- 19: Rastelement
- 20: Bündelader
- 21: Eingang
- 22: Schaltfaser

## Patentansprüche

1. Managementfähige Spleißkassette für die Telekommunikations- und Datentechnik, zur Aufnahme von Trägerschalen (2) für jeweils zwei Glasfasern, bestehend aus einem Gehäuse (3) mit Leitungsanschlußmitteln (4), einem mit dem Gehäuse (3) verbundenen Träger (5), mit dem die Trägerschalen (2) drehbar verbunden sind,
**dadurch gekennzeichnet,** daß
die Trägerschalen (2) in mindestens zwei nebeneinanderliegenden Aufnahmen (6) jeweils übereinander gestapelt angeordnet sind, wobei jede der Trägerschalen (2) an einer ihrer Seiten bis in eine Raststellung (7) drehbar gelagert ist.

2. Managementfähige Spleißkassette nach Anspruch 1, dadurch gekennzeichnet, daß Rastvorrichtungen (8) zum Einrasten in Aufnahmen von Spleißkassettengehäusen (9) mit Reservelängenführungen (10) vorgesehen sind.

3. Managementfähige Spleißkassette nach Anspruch 1, dadurch gekennzeichnet, daß die äußeren Abmessungen so gewählt sind, daß ein Austausch mit Spleißkassetten der Bauart bis vierundzwanzig Spleiße gewährleistet ist.

4. Managementfähige Spleißkassette nach Anspruch 1, dadurch gekennzeichnet, daß die Trägerschalen (2) Grifföffnungen (11) aufweisen.

5. Managementfähige Spleißkassette nach Anspruch 1, dadurch gekennzeichnet, daß Griffmulden (12) vorgesehen sind.

6. Managementfähige Spleißkassette nach Anspruch 1, dadurch gekennzeichnet, daß mehrere managementfähige Spleißkassetten (1) übereinandergestapelt sind.

7. Managementfähige Spleißkassette nach Anspruch 1, dadurch gekennzeichnet, daß ein Deckel vorgesehen ist.

8. Managementfähige Spleißkassette nach Anspruch 1, dadurch gekennzeichnet, daß eine Reservelänge der Glasfasern zwischen einem Spleißplatz und dem Gehäuse (9) gewährleistet ist.

9. Managementfähige Spleißkassette nach Anspruch 1, dadurch gekennzeichnet, daß die Drehpunkte (13) der einzelnen Trägerschalen (2) in unterschiedlichen Ebenen angeordnet sind.
